Europäisches Patentamt

European Patent Office

Office européen des brevets

(19)

(11) Numéro de publication: **0 064 465 B1**

(12) **FASCICULE DE BREVET EUROPEEN**

(45) Date de publication du fascicule du brevet:
**19.02.86**

(51) Int. Cl.⁴: **F 16 F 15/08**, F 16 F 1/36

(21) Numéro de dépôt: **82400797.5**

(22) Date de dépôt: **30.04.82**

(54) Dispositif amortisseur de chocs et/ou de vibrations entre un élément porteur et un élément porté.

(30) Priorité: **08.05.81 FR 8109252**

(43) Date de publication de la demande:
**10.11.82 Bulletin 82/45**

(45) Mention de la délivrance du brevet:
**19.02.86 Bulletin 86/8**

(84) Etats contractants désignés:
**AT BE CH DE GB IT LI LU NL SE**

(56) Documents cités:
**DE - B - 1 087 409**
**DE - C - 636 733**
**DE - C - 720 454**
**DE - C - 728 501**
**DE - C - 852 320**
**FR - A - 1 302 531**
**FR - A - 1 492 211**
**FR - A - 2 079 487**
**GB - A - 253 787**

(73) Titulaire: **BARRY WRIGHT CORPORATION, 1 Newton Executive Park, Newton Lower Falls Massachusetts 02162 (US)**

(72) Inventeur: **Pineau, André Lucien, 12, rue de Béarn, F-92210 Saint-Cloud (FR)**

(74) Mandataire: **Patentanwälte Grünecker, Kinkeldey, Stockmair & Partner et al, Maximilianstrasse 58, D-8000 München 22 (DE)**

ACTORUM AG

## Description

La présente invention concerne essentiellement un dispositif amortisseur de chocs et/ou de vibrations entre un élément porteur et un élément porté.

On connaît déjà des dispositifs amortisseurs de chocs et/ou de vibrations entre un élément porteur et un élément porté qui comprennent un corps solidarisable avec l'un desdits éléments, comportant une cavité de préférence sensiblement cylindrique à l'intérieur de laquelle pénètre un piston dont la tige est solidarisable avec l'autre desdits éléments. Ces dispositifs comprennent en outre au moins une membrane élastiquement déformable disposée dans ladite cavité et interposée entre la tête du piston et le fond de la cavité qui lui fait face.

Ces appareils ont une efficacité multi-directionnelle excellente pour les vibrations. Leur capacité d'absorption des chocs est bonne selon l'axe vertical, en raison de la course importante résultant de la disposition d'une membrane élastiquement déformable.

Par contre, l'amortissement des chocs latéraux est relativement faible, du fait de la course horizontale limitée par rapport à l'axe central de l'amortisseur. On connait selon le document FR-A-1 492 211 un tel dispositif amortisseur selon lequel la membrane interposée entre la tête du piston et le fond de la cavité qui lui fait face a sa périphérie coincée par une partie appropriée (6) de la cavité ce qui donne lieu à des efforts de traction et de compression de la membrane lors de déformation de celle-ci limitant sa longévité. En outre, la membrane antagoniste (13) a une partie plane en regard de la membrane porteuse (7) de sorte que l'amortissement des chocs latéraux est relativement faible.

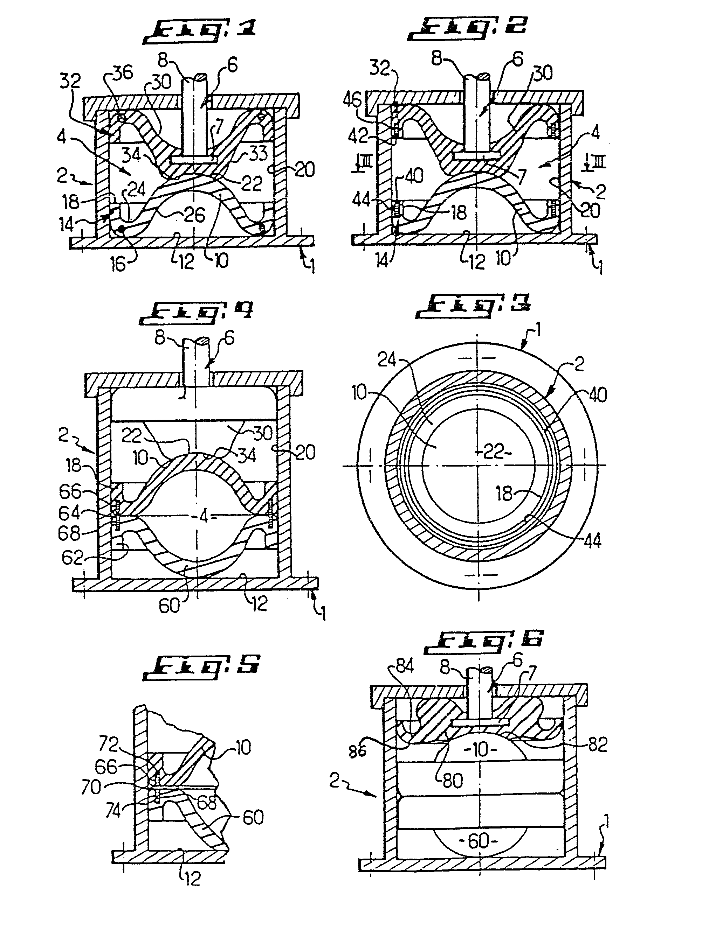

On connait aussi par le document FR-A-1 302 531 un dispositif amortisseur selon lequel la membrane porteuse (11) est disposée de manière à se déformer centralement relativement à sa périphérie qui est coincée soit latéralement contre la cavité du corps (figures 1 à 3) soit par un épaulement (19) approprié du corps de l'amortisseur. La tête du piston est conformée au sommet de la membrane porteuse de manière à améliorer la portée sur le sommet de la membrane porteuse et une plus grande progressivité d'appui sur la membrane.

Ceci améliore également l'absorption élastique des chocs dans la direction axiale et radiale. Ce dispositif amortisseur comporte une membrane antagoniste (13) disposée à l'arrière de la tête (9) du piston et dans le mode de réalisation des figures 3 à 6 solidarisée de la tige (8) du piston. Cette membrane (13) est relativement rigide tout en ayant une formule générale conique. L'appui latéral de la membrane (13) sur l'alésage du corps (3) se fait par une lèvre relativement déformable (22) en formant ainsi un système à élasticité variable et un effet de butée progressive (figures 5, 6).

De même que dans le document FR-A-1 492 211, le coincement de la membrane porteuse (11) réduit la longévité de la membrane tandis que l'amortissement des vibrations horizontales est relativement faible.

On connait enfin par le document DE-C-852 320 un élément souple élastique de préférence pour l'appui de machines à écrire et comptables. Cet élément comporte à sa périphérie opposée à la machine à supporter un insert annulaire métallique (4) et sa périphérie en regard de la machine (2) à supporter aussi un insert métallique (5) disposé dans sa masse partiellement ou en totalité.

Le but au moins de l'insert métallique (4) à la périphérie de l'élément élastique est d'éviter que le bord de l'élément élastique, lors d'un mouvement de déplacement latéral, ne se replie (Page 2, lignes 118-124).

Ce document ne concerne pas directement le domaine technique des dispositifs amortisseurs de chocs et/ou de vibrations selon lequel les chocs ou les vibrations peuvent provenir non seulement d'un élément porteur, mais aussi d'un élément porté, vibrations qu'il est nécessaire d'amortir. Dans le cas d'appareils plus lourds, il est prévu une partie complémentaire (9) centrale se prolongeant à l'intérieur de l'élément (1). Cet élément (1) a son sommet plat.

Ainsi, on peut dire que les différents dispositifs amortisseurs connus jusqu'à présent présentent un certain nombre d'inconvénients parmi lesquels une efficacité limitée relativement aux chocs latéraux du fait d'une course horizontale très limitée.

En outre, la mise en série de plusieurs membranes coulissant sur un axe vertical fixe, disposition très favorable pour l'amortissement de chocs verticaux est impossible suivant le plan horizontal. Par ailleurs, la recherche d'une course latérale importante sur une seule membrane porteuse exigerait des dimensions excessives et, incompatibles avec des encombrements limités.

Par conséquent, au total, il est difficile d'obtenir une capacité d'absorption des chocs latéraux qui soit bonne, sans avoir une course latérale importante, et cela est d'autant plus difficile que la course doit être faible pour une bonne réalisation pratique.

La présente invention a donc pour but de pallier les inconvénients précités en proposant une solution qui permette d'obtenir une efficacité d'amortissement multidirectionnel excellente pour les chocs et les vibrations, et notamment un amortissement important aux chocs latéraux, et cela dans un encombrement extrêmement faible.

Cette solution consiste selon l'invention en un dispositif du type précédemment décrit qui est caractérisé en ce que la surface de la membrane de la tête du piston est au moins partiellement conformée à la surface en regard de la membrane sur laquelle elle prend appui, au moins la membrane interposée entre le piston et le fond de la cavité a sensiblement la forme d'une cloche et comporte à sa périphérie une jupe dirigée vers le sommet de la membrane en définissant ainsi un point d'inflexion à la jonction de ladite jupe périphérique et de la partie formant cloche de la membrane, ladite membrane interposée prend appui de manière librement coulissante contre la paroi latérale de la cavité du corps, en créant ainsi une composante verticale lors du déplacement horizontal relatif du piston et du corps résultant de choc latéral, en participant ainsi de façon efficace à l'amortissement des chocs horizontaux.

Selon une caractéristique particulière de l'invention, la membrane de la tête du piston comprend également une jupe ayant une épaisseur relativement plus faible que celle de l'épaisseur générale de la membrane en formant ainsi une lèvre mince plus souple, qui est de préférence à concavité dont le sommet est dirigé à l'opposé de la tige du piston.

D'autre part, la présence de la lèvre mince plus souple crée un système à basse fréquence de résonnance, lors d'une vibration horizontale, très favorable à l'amortissement des vibrations.

Selon une autre caractéristique de l'invention, chaque membrane a sensiblement la forme d'une cloche et comporte la jupe précitée définissant un point d'inflexion à la jonction de la jupe périphérique de la partie formant cloche de la membrane.

Selon encore une autre caractéristique très importante de l'invention, le dispositif est en outre caractérisé en ce qu'il comprend également au voisinage du point d'inflexion d'au moins une membrane élastiquement déformable précitée une armature rigidifiante noyée au moins partiellement dans sa masse.

Selon une autre caractéristique de l'invention, chaque membrane interposée entre la tête du piston et la cavité qui lui fait face comprend une armature rigidifiante.

Selon un mode de réalisation particulier, l'armature a sensiblement une forme torique.

Selon une variante de réalisation, cette armature a sensiblement une forme cylindrique et est disposée au moins partiellement dans la masse de la jupe précitée.

Selon un autre mode de réalisation, la jupe précitée de la membrane comprend une rainure annulaire cylindrique concentrique au corps débouchante dans laquelle est logée au moins partiellement l'armature.

Selon un mode de réalisation préférentiel, le dispositif selon l'invention comprend une deuxième membrane élastiquement déformable interposée entre la tête du piston et le fond de la cavité qui lui fait face, comportant également une jupe prenant appui contre la paroi latérale, lesdites deux membranes prenant appui l'une contre l'autre par leur bord périphérique et étant de préférence solidarisées entre elles par l'intermédiaire d'une armature commune.

Selon un mode de réalisation particulier, la deuxième membrane a également sensiblement la forme d'une cloche et dans ce cas l'une des deux membranes a son sommet qui prend appui sur le fond de la cavité faisant face à la tête du piston, l'autre membrane ayant son sommet qui supporte la tête du piston.

Selon une variante de réalisation une rainure annulaire est prévue au niveau de la jupe de chaque membrane interposée entre la tête du piston et le fond de la cavité, lesdites rainures débouchant en regard l'une de l'autre tandis que l'armature précitée est constituée par un cylindre de dimension suffisante pour pénétrer simultanément dans ladite rainure desdites membrane afin de les solidariser entre elles.

Selon une variante, l'armature peut comprendre un anneau plat disposé entre la membrane et comportant de part et d'autre de celui-ci une pièce de centrage venant se loger dans la rainure correspondante de chaque membrane.

Par ailleurs, selon un mode de réalisation particulier la membrane de la tête du piston est identique aux autres membranes et avantageusement présente une concavité tournée vers la tige du piston bien que l'inverse soit possible.

Toutes ces caractéristiques permettent donc de réaliser un dispositif amortisseur présentant toute l'élasticité voulue dans une direction quelconque et avantageusement suivant une direction latérale de manière à absorber avec une efficacité tout à fait inattendue les vibrations et les chocs latéraux. On notera que la présence de l'armature selon l'invention permet de limiter ou même de supprimer pratiquement les frottements tout en conservant le diamètre utile de la membrane. On notera que l'expression «la membrane élastiquement déformable est montée librement coulissante à sa périphérie» signifie qu'elle est montée coulissante à sa périphérie, avec ou sans frottement, à l'intérieur de la cavité du corps dans laquelle pénètre le piston.

Par ailleurs, comme mentionné précédemment lors de chocs horizontaux on arrive selon le dispositif de l'invention à créer une composante verticale lors du déplacement horizontal relatif du piston et du corps du dispositif résultant d'un choc latéral, en participant ainsi de façon efficace à l'amortissement des chocs horizontaux.

Enfin, le dispositif selon l'invention est également d'un encombrement minimum et est aussi facile à réaliser.

D'autres caractéristiques et avantages de l'invention apparaîtront à la lumière de la description explicative qui va suivre faite en référence aux dessins annexés donnés uniquement à titre d'illustration et qui ne sauraient donc en aucune façon en limiter la portée.

Dans les dessins:

La fig. 1 est une vue en coupe suivant l'axe de symétrie d'un premier mode de réalisation d'un dispositif amortisseur selon la présente invention;

La fig. 2 représente une variante de réalisation du dispositif représenté à la figure 1;

La fig. 3 est une vue selon la ligne de trace III–III de la figure 2;

La fig. 4 représente un autre mode de réalisation d'un dispositif amortisseur selon la présente invention;

La fig. 5 représente une vue de détail agrandie selon la flèche V de la figure 4; et

La fig. 6 représente un autre mode de réalisation du dispositif représenté à la figure 4.

En référence à la figure 1, un dispositif amortisseur de chocs et/ou de vibrations entre un élément porteur 1 et un élément porté (non représenté) comprend un corps 2 solidarisable avec l'un (1) des éléments porteur et porté, comportant une cavité 4 de préférence sensiblement cylindrique à l'intérieur de laquelle pénètre un piston 6 dont la tige 8 est solidarisable avec l'autre des éléments porteur et porté. Par ailleurs, ce dispositif amortisseur comprend au moins une membrane élastiquement déformable 10 disposée dans ladite cavité 4 et interposée entre la tête 7 du piston 6 et le fond 12 de la cavité 4 qui lui fait face.

Selon une caractéristique essentielle de la présente invention la membrane 10 est montée librement coulissante à sa périphérie 14, c'est-à-dire avec ou sans frottement, à l'intérieur de ladite cavité et ladite membrane comprend au voisinage de sa périphérie 14 une armature 16 rigidifiante noyée au moins partiellement dans sa masse.

Avantageusement, la membrane a sensiblement la forme d'une cloche comme représentée et comporte à sa périphérie une jupe 18 prenant appui contre la paroi latérale de la cavité du corps. La jupe 18 est dirigée vers le sommet 22 de la membrane tandis que l'armature 16 est noyée dans la masse de la membrane 10 au voisinage du point d'inflexion 24 défini par la jupe 18 périphérique et la partie 26 formant cloche de la membrane 10.

Selon le mode représenté à la figure 1, l'armature a selon un mode de réalisation particulier sensiblement une forme torique. Cette armature est de préférence métallique et peut être réalisée par un ou plusieurs éléments métalliques à la manière des armateurs pneumatiques de sorte que des armateurs analogues à celles utilisées pour les pneumatiques sont bien entendu utilisables dans le cadre de l'invention.

On notera que la membrane 10 est en appui librement coulissant contre la paroi latérale de la cavité 4 du corps 2 et qu'elle repose également librement contre le fond 12 de la cavité 4.

Selon une autre caractéristique essentielle de l'invention, la tête 7 du piston 6 est noyée dans la masse d'une autre membrane 30 élastiquement déformable venant par sa périphérie 32 prendre un appui librement coulissant contre la paroi latérale 20 de la cavité 4. La surface 33 de la membrane 30 de la tête 7 du piston 6 est au moins partiellement conformée à la surface en regard 22 de la membrane 10 sur laquelle elle prend appui, comme on le voit bien à la figure 1.

Avantageusement, comme représenté la membrane 30 de la tête du piston est identique à la membrane 10 interposée entre la tête du piston 6 et le fond 12 de la cavité. Avantageusement, cette membrane 30 présente une concavité tournée vers la tige 8 du piston 6 de sorte que le sommet 34 de cette membrane 30 prend appui contre le sommet 22 de la membrane 10. Ainsi, chaque membrane ayant sensiblement la forme d'une cloche, la surface 33 de la membrane de la tête du piston est au moins partiellement conformée, en son sommet 34 au sommet 22 de la membrane 10 sur laquelle elle prend appui.

Comme indiqué, cette membrane 30 peut être identique à la membrane 10 et de ce fait peut également comporter une armature 36 noyée dans la masse de sa jupe 32 qui peut également être de forme torique.

Selon un deuxième mode de réalisation représenté à la figure 2, pour lequel on a utilisé les mêmes nombres de référence pour les mêmes parties, on notera que dans ce cas chaque membrane comprend une armature 40, 42 ayant sensiblement une forme cylindrique et disposée au moins partiellement dans la masse de la jupe 18, 32 de la membrane 10, 30, respectivement. Avantageusement, la jupe 18, 32 comprend alors une rainure 44, 46 annulaire cylindrique concentrique au corps 2 débouchante dans laquelle est logée au moins partiellement l'armature 40, 42, respectivement. Dans l'exemple représenté la rainure est prévue de manière à ce que l'armature soit rasante.

Comme indiqué précédemment, la présence de ces armatures permet de limiter, voire de supprimer pratiquement les frottements tout en présentant l'avantage de permettre un coulissement libre de la membrane sur la paroi latérale 20 de la cavité 4 du corps 2.

En référence au mode de réalisation représenté aux figures 4 et 5, une deuxième membrane 60 élastiquement déformable peut être interposée entre la tête du piston 6 et le fond 12 de la cavité 4 qui lui fait face. Cette deuxième membrane 60 comporte également avantageusement une jupe 62 prenant appui de manière librement coulissante contre la paroi latérale 20 du corps 2, les deux membranes 10 et 60 prenant appui l'une contre l'autre par leur bord périphérique formant jupe 62, 18. Lesdites membranes 60, 10 sont de préférence solidarisées entre elles par l'intermédiaire d'une armature commune 64.

Dans ce cas, une rainure annulaire 66, 68 est prévue au niveau de ladite jupe 18, 62 respectivement de chaque membrane 10, 60 en regard l'une de l'autre, l'armature 64 étant alors constituée par un cylindre de dimension suffisante pour pénétrer simultanément dans lesdites rainures 66, 68 comme représenté, afin de solidariser les membranes 10, 60 entre elles.

Selon une variante de réalisation représentée à la figure 5, l'armature peut comprendre un anneau plat 70 disposé entre les membranes 60, 10 et comportant de part et d'autre un pièce de centrage 72, 74 venant se loger dans la rainure correspondante 66, 68 de chaque membrane 10, 60, respectivement.

L'épaisseur de l'anneau plat 70 de l'armature peut être modifiée à volonté afin d'augmenter la course.

Par ailleurs, en référence à la figure 6, on a représenté un autre mode de réalisation de la membrane dans laquelle est noyée la tête 7 du piston 6. On notera que également la surface 82 de cette membrane 80 est au moins partiellement conformée au sommet 22 de la membrane 10 sur laquelle elle prend appui. Comme indiquée précédemment, cette disposition permet de créer lors de chocs horizontaux une composante verticale qui contribue efficacement à l'armortissement desdits chocs.

Par ailleurs, avantageusement, cette membrane 80 à sa jupe 84 présente une épaisseur sensiblement amincie par rapport à l'épaisseur générale de la membrane 80 en formant ainsi une lèvre mince de grande souplesse.

Lors des vibrations horizontales cette lèvre mince 84 crée un système à basse fréquence de résonance très favorable à l'amortissement des vibrations.

Lors des chocs latéraux, cette lèvre mince 84 est rapidement «court-circuitée» (c'est-à-dire ne joue plus aucun rôle pour supporter l'effort résultant du choc) en raison de sa faible épaisseur (n'a qu'un rôle vibratoire) le choc est alors transmis à la partie épaissie de la membrane 80.

Cette lèvre mince 84 a une concavité de préférence dirigée vers le bas, c'est-à-dire avec le sommet 86 de la concavité dirigé à l'opposé de la tige 8 du piston 6.

Dans ce cas, il est naturellement préférable que cette lèvre mince 84 ne comporte pas d'armature comme dans le cas représenté aux figures 1 et 2.

De manière générale les divers modes de réalisation sont combinables entre eux. On notera que chaque membrane est avantageusement montée sans pré-contrainte, c'est-à-dire sans déformation préalable de compression au montage.

## Revendications

1. Dispositif amortisseur de chocs et/ou de vibrations entre un élément porteur (1) et un élément porté, comprenant un corps (2) solidarisable avec l'un desdits éléments, comportant une cavité (4) de préférence sensiblement cylindrique à l'intérieur de laquelle pénètre un piston (16) dont la tige (8) est solidarisable avec l'autre desdits éléments, au moins une membrane élastiquement déformable (10) disposée dans ladite cavité et interposée entre la tête du piston et le fond (12) de la cavité qui lui fait face, la tête du piston est noyée dans la masse d'une membrane élastiquement déformable (30) venant prendre un appui coulissant contre la paroi latérale de la cavité dudit corps et prenant normalement appui sur ladite membrane (10) interposée entre la tête du piston et le fond de la cavité; caractérisé en ce que la surface (33) de la membrane (30) de la tête (7) du piston (6) est au moins partiellement conformée à la surface en regard (22) de la membrane (10) sur laquelle elle prend appui, au moins la membrane (10) interposée entre le piston (6) et le fond (12) de la cavité (4) a sensiblement la forme d'une cloche et comporte à sa périphérie une jupe dirigée vers le sommet de la membrane en définissant ainsi un point d'inflexion (24) à la jonction de ladite jupe périphérique et de la partie formant cloche de la membrane, et ladite membrane (10) interposée prend appui de manière librement coulissante contre la paroi latérale de la cavité du corps.

2. Dispositif selon la revendication 1, caractérisé en ce que chaque membrane a sensiblement la forme d'une cloche et comporte la jupe (18, 32) précitée définissant un point d'inflexion à la jonction de la jupe périphérique et de la partie formant cloche de la membrane.

3. Dispositif selon la revendication 1 ou 2, caractérisé en ce qu'il comprend également au voisinage du point d'inflexion (24) d'au moins une membrane élastiquement déformable précitée, une armature (16) rigidifiante noyée dans la masse de ladite membrane.

4. Dispositif selon la revendication 3, caractérisé en ce que chaque membrane (10, 60) interposée entre la tête du piston (6) et le fond (12) de la cavité comprend une armature (16, 40, 64, 70) rigidifiante.

5. Dispositif selon la revendication 3 ou 4, caractérisé en ce que l'armature (16) a sensiblement une forme torique.

6. Dispositif selon la revendication 3 ou 4, caractérisé en ce que l'armature (40, 64) a sensiblement une forme cylindrique et est disposée au moins partiellement dans la masse de la jupe.

7. Dispositif selon la revendication 6, caractérisé en ce que la jupe comprend une rainure annulaire (44, 66, 68, 74) concentrique au corps débouchante dans laquelle est logée au moins partiellement l'armature précitée.

8. Dispositif selon l'une des revendications précédentes, caractérisé en ce qu'une deuxième membrane (60) élastiquement déformable est interposée entre la tête du piston (6) et le fond (12) de la cavité qui lui fait face, comportant également une jupe (62) prenant appui contre la paroi latérale de manière librement coulissante, lesdites deux membranes (10, 60) prenant appui l'une contre l'autre par leur bord périphérique et étant de préférence solidarisées entre elles par l'intermédiaire d'une armature (64, 74) commune.

9. Dispositif selon la revendication 8, caractérisé en ce que la deuxième membrane (60) a sensiblement la forme d'une cloche, l'une (60) des deux membranes a son sommet qui prend appui sur le fond (12) de la cavité (4) faisant face à la tête du piston (6), l'autre membrane (10) ayant son sommet qui supporte la tête du piston (6).

10. Dispositif selon la revendication 9, caractérisé en ce qu'une rainure annulaire (66, 68) est prévue au niveau de la jupe (18, 62) de chaque membrane, lesdites rainures débouchant en regard l'une de l'autre tandis que l'armature commune (64, 74) est constituée par un cylindre de dimension suffisante pour pénétrer simultanément dans lesdites rainures desdites membranes.

11. Dispositif selon la revendication 10, caractérisé en ce que l'armature commune (64) comprend un anneau plat (70) disposé entre les membranes (10, 60) et comportant de part et d'autre une pièce de centrage (72, 74) venant se loger dans la rainure correspondante (66, 68) de la membrane.

12. Dispositif selon l'une des revendications précédentes, caractérisé en ce que la membrane de la tête du piston est identique à la membrane (10, 60) interposée entre la tête du piston et le fond de la cavité du corps et présente avantageusement une concavité tournée vers la tige du piston (6).

13. Dispositif selon l'une quelconque des revendications 2 à 12, caractérisé en ce que chaque membrane est montée sans pré-contrainte.

14. Dispositif selon l'une quelconque des revendications 1 à 13, caractérisé en ce que chaque armature (16, 40, 64, 70) est métallique et peut comprendre un ou plusieurs éléments ou plis analogues à ceux des armatures de pneumatiques.

15. Dispositif selon la revendication 1, caractérisé en ce que la membrane (80) de la tête du piston comprend également une jupe (84) ayant une épaisseur relativement plus faible que celle de l'épaisseur générale de la membrane en formant ainsi une lèvre mince plus souple, qui est de préférence à concavité dont le sommet (86) est dirigé à l'opposé de la tige (8) du piston (6).

## Patentansprüche

1. Stoss- und/oder Schwingunsdämpfungsvorrichtung zwischen einem tragenden Teil (1) und einem getragenen Teil, umfassend einen Körper (2), welcher fest mit einem der beiden Teile verbunden werden kann und einen Hohlraum (4) aufweist, welcher vorzugsweise ein im wesentlichen zylindrisches Inneres aufweist und in welchen ein Kolben (6) hineinreicht, dessen Kolbenstange (8) fest mit dem anderen der beiden Teile verbunden werden kann, wenigstens eine elastisch verformbare Membran (10), welche in dem Hohlraum angeordnet und zwischen den Kolbenkopf und die gegenüberliegende Basis (12) des Hohlraumes eingefügt ist, wobei der Kolbenkopf eingebettet ist in die Masse einer elastisch verformbaren Membran (30), welche verschieblich gegen die Seitenwand des Hohlraumes des Körpers gelagert ist und sich normalerweise auf der zwischen dem Kolbenkopf und der Basis des Hohlraumes eingefügten Membran (10) abstützt, dadurch gekennzeichnet, dass die Oberfläche (33) der Membran (30) des Kopfes (7) des Kolbens (6) wenigstens teilweise konform ist mit der gegenüberliegenden Oberfläche (22) der Membran (10), auf welche sie sich stützt, dass wenigstens die zwischen dem Kolben (6) und der Basis (12) des Hohlraumes (4) eingefügte Membran (10) im wesentlichen die Gestalt einer Glocke aufweist und an ihrem Umfang einen zum Scheitel der Membran gerichteten Flansch aufweist, so dass ein Wendepunkt (24) an der Verbindung des Umfangsflansches und des glockenförmigen Abschnittes der Membran definiert ist, und dass sich die zwischengefügte Membran (10) frei gleitend an der Seitenwand des Hohlraumes des Körpers abstützt.

2. Vorrichtung nach Anspruch 1, dadurch gekennzeichnet, dass jede Membran im wesentlichen glockenförmig gestaltet ist und den vorgenannten Flansch (18, 32) aufweist, welcher einen Wendepunkt an der Verbindung des vorgenannten Umfangsflansches und des glockenförmigen Abschnittes der Membran definiert.

3. Vorrichtung nach Anspruch 1 oder 2, dadurch gekennzeichnet, dass ferner im Bereich des Wendepunktes (24) wenigstens eine der vorstehend genannten elastisch verformbaren Membranen eine versteifende Armierung (16) aufweist, welche in dem Körper der Membran eingebettet ist.

4. Vorrichtung nach Anspruch 3, dadurch gekennzeichnet, dass jede zwischen den Kopf des Kolbens (6) und die Basis (12) des Hohlraumes eingefügte Membran (10, 60) eine versteifende Armierung (16, 40, 64, 70) aufweist.

5. Vorrichtung nach Anspruch 3 oder 4, dadurch gekennzeichnet, dass die Armierung (16) im wesentlichen eine Ringgestalt hat.

6. Vorrichtung nach Anspruch 3 oder 4, dadurch gekennzeichnet, dass die Armierung (40, 64) im wesentlichen eine zylindrische Gestalt hat und wenigstens teilweise im Körper des Flansches angeordnet ist.

7. Vorrichtung nach Anspruch 6, dadurch gekennzeichnet, dass der Flansch eine offene, ringförmige Ausnehmung (44, 66, 68, 74) aufweist, welche konzentrisch zu dem Körper ist und in welcher die vorstehend genannte Armierung wenigstens teilweise angeordnet ist.

8. Vorrichtung nach einem der vorgehenden Ansprüche, dadurch gekennzeichnet, dass eine zweite elastisch verformbare Membran (60) zwischen den Kopf des Kolbens (6) und die ihm gegenüberliegenden Basis (12) des Hohlraumes eingefügt ist, welche gleichfalls einen Flansch (62) aufweist, welcher sich an der Seitenwandung frei gleitend abstützt, wobei die beiden Membranen (10, 60) sich gegenseitig mit ihrem Umfangsrand abstützen und vorzugsweise fest miteinander mittels einer gemeinsamen Armierung (64, 74) verbunden sind.

9. Vorrichtung nach Anspruch 8, dadurch gekennzeichnet, dass die zweite Membran (60) im wesentlichen die Gestalt einer Glocke aufweist, wobei sich die eine (60) der beiden Membranen mit ihrem Scheitel auf der dem Kopf des Kolbens (6) gegenüberliegenden Basis (12) des Hohlraumes (4) abstützt und die andere Membran (10) mit ihrem Scheitel den Kopf des Kolbens (6) trägt.

10. Vorrichtung nach Anspruch 9, dadurch gekennzeichnet, dass eine ringförmige Ausnehmung (66, 68) in der Ebene des Flansches (18, 62) einer jeden Membrane vorgesehen ist, wobei sich diese Ausnehmungen in Richtung aufeinander öffnen, während die gemeinsame Armierung (64, 74) von einem Zylinder gebildet ist, dessen Abmessung hinreichend bemessen ist, um gleichzeitig in die Ausnehmungen der Membra-

0 064 465

nen einzudringen.

11. Vorrichtung nach Anspruch 10, dadurch gekennzeichnet, dass die gemeinsame Armierung (64) einen ebenen Ring (70) aufweist, welcher zwischen den Membranen (10, 60) angeordnet ist und auf jeder Seite ein Zentrierungsglied (72, 74) aufweist, welches in der entsprechenden Ausnehmung (66, 68) der Membrane aufgenommen ist.

12. Vorrichtung nach einem der vorhergehenden Ansprüche, dadurch gekennzeichnet, dass die Membrane des Kolbenkopfes identisch ist mit der zwischen dem Kolbenkopf und der Basis des Körpers eingefügten Membrane (10, 60), und vorzugsweise eine der Stange des Kolbens (6) zugewandte Konkavität aufweist.

13. Vorrichtung nach einem der Ansprüche 2 bis 12, dadurch gekennzeichnet, dass jede Membran ohne Vorspannung eingebaut ist.

14. Vorrichtung nach einem der Patentansprüche 1 bis 13, dadurch gekennzeichnet, dass die Armierung (16, 40, 64, 70) aus Metall besteht und dass sie eine oder mehrere Elemente oder Falze analog zu den Armierungen von pneumatischen Reifen aufweist.

15. Vorrichtung nach Anspruch 1, dadurch gekennzeichnet, dass die Membran (80) des Kolbenkopfes gleichfalls einen Flansch (84) aufweist, dessen Dicke vergleichsweise viel dünner ist als die generelle Dicke der Membran, wodurch eine viel geschmeidigere dünne Lippe gebildet ist, die vorzugsweise eine Konkavität besitzt, deren Scheitel (86) entgegengesetzt zur Stange (8) des Kolbens (6) gerichtet ist.

## Claims

1. Shock and/or vibration absorbing device between a supporting member (1) and a supported member, comprising a body (2) which can be fixedly joined to one of the said members and comprises a cavity (4) which is preferably substantially cylindrical and into which there penetrates a piston (6) whose rod (8) can be fixedly joined to the other of the said members, at least one resiliently deformable diaphragm (10) which is arranged in the said cavity and is interposed between the piston head and the base (12) of the cavity facing it, the piston head is embedded in the body of a resiliently deformable diaphragm (30) which is slidably supported against the side wall of the cavity of the said body and normally rests on the said diaphragm (10) interposed between the piston head and the base of the cavity; characterised in that the surface (33) of the diaphragm (30) of the head (7) of the piston (6) conforms at least partially to the opposing surface (22) of the diaphragm (10) on which it rests, at least the diaphragm (10) interposed between the piston (6) and the base (12) of the cavity (4) is substantially bell-shaped and comprises at its periphery a skirt directed towards the vertex of the diaphragm thus defining a point of inflexion (24) at the junction of the said peripheral skirt and the bell-shaped portion of the diaphragm, and the said interposed diaphragm (10) is supported in a freely sliding manner against the side wall of the cavity of the body.

2. Device according to claim 1, characterised in that each diaphragm is substantially bell-shaped and comprises the above-mentioned skirt (18, 32) defining a point of inflexion at the junction of the peripheral skirt and the bell-shaped portion of the diaphragm.

3. Device according to claim 1 or 2, characterised in that it also comprises near the point of inflexion (24) of at least one above-mentioned resiliently deformable diaphragm, a stiffening reinforcement (16) embedded in the body of the said diaphragm.

4. Device according to claim 3, characterised in that each diaphragm (10, 60) interposed between the head of the piston (6) and the base (12) of the cavity comprises a stiffening reinforcement (16, 40, 64, 70).

5. Device according to claim 3 or 4, characterised in that the reinforcement (16) is substantially toric.

6. Device according to claim 3 or 4, characterised in that the reinforcement (40, 64) is substantially cylindrical and is arranged at least partially in the body of the skirt.

7. Device according to claim 6, characterised in that the skirt comprises an open annular groove (44, 66, 68, 74) which is concentric with the body and in which is arranged at least partially the above-mentioned reinforcement.

8. Device according to one of the preceding claims, characterised in that a second resiliently deformable diaphragm (60) is interposed between the head of the piston (6) and the base (12) of the cavity facing it and also comprises a skirt (62) which is supported against the side wall in a freely sliding manner, the said two diaphragms (10, 60) resting one against the other via their peripheral edges and preferably being fixedly joined to one another via a common reinforcement (64, 74).

9. Device according to claim 8, characterised in that the second diaphragm (60) is substantially bell-shaped, the vertex of one (60) of the two diaphragms rests on the base (12) of the cavity (4) facing the head of the piston (6) and the vertex of the other diaphragm (10) supports the head of the piston (6).

10. Device according to claim 9, characterised in that an annular groove (66, 68) is provided at the level of the skirt (18, 62) of each diaphragm, the said grooves opening out opposite one another while the common reinforcement (64, 74) is formed by a cylinder sufficiently large to penetrate the said grooves of the said diaphragms simultaneously.

11. Device according to claim 10, characterised in that the common reinforcement (64) comprises a flat ring (70) which is arranged between the diaphragms (10, 60) and comprises on each side a centering piece (72, 74) which is accommodated in the corresponding groove (66, 68) of the diaphragm.

7

12. Device according to one of the preceding claims, characterised in that the diaphragm of the piston head is identical with the diaphragm (10, 60) interposed between the piston head and the base of the cavity of the body and advantageously has a concavity facing the rod of the piston (6).

13. Device according to any one of claims 2 to 12, characterised in that each diaphragm is mounted without pre-stressing.

14. Device according to any one of claims 1 to 13, characterised in that each reinforcement (16, 40, 64, 70) is made of metal and may comprise one or more members or plies similar to those of the reinforcements of pneumatic tyres.

15. Device according to claim 1, characterised in that the diaphragm (80) of the piston head also comprises a skirt (84) whose thickness is relatively less than the general thickness of the diaphragm, thus forming a more supple thin lip which preferably has a concavity the vertex (86) of which is directed in the opposite direction to the rod (8) of the piston (6).

0 064 465

Fig. 1

Fig. 2

Fig. 4

Fig. 3

Fig. 5

Fig. 6

9